# EUROPEAN PATENT SPECIFICATION

(11) **EP 1 559 610 B1**
(45) Date of publication and mention of the grant of the patent: **18.11.2009**
(21) Application number: 05000792.1
(22) Date of filing: 17.01.2005
(51) Int. Cl.: B60N 2/225

(54) **Angle-adjusting device**
Winkelverstellvorrichtung
Dispositif de réglage d'angle

(30) Priority: 27.01.2004 JP 2004018640
(43) Date of publication of application: 03.08.2005
(73) Proprietor: AISIN SEIKI KABUSHIKI KAISHA, Kariya-shi, Aichi-ken 448-8650 (JP)
(72) Inventor: Ito, Sadao, Kariya-shi, Aichi-ken, 448-8650 (JP)
(74) Representative: Pautex Schneider, Nicole Véronique

(56) References cited:
- WO-A-2004/089684
- DE-A1- 4 115 204
- US-A- 4 896 398
- US-A- 5 452 938

## Description

### FIELD OF THE INVENTION

The present invention relates to an angle-adjusting device. More particularly, the present invention pertains to an angle-adjusting device for adjusting a reclining angle of a seatback for a vehicle seat.

### BACKGROUND

Known angle-adjusting devices for the vehicle seat include a fixed arm having an internal gear fixed at a frame of a seat cushion, and a movable arm having an external gear fixed at a frame of a seatback. With the construction of known angle-adjusting devices described in U.S. Patent No. 4713986 and JPH06(1994)-31960Y2, the number of teeth on an external gear is set at less than the number of teeth on an internal gear. Moreover, with this construction, the external gear is decelerated relative to the internal gear by rotating a central shaft of the external gear about a central shaft of the internal gear to output high torque to the movable arm.

The internal gear and the external gear are formed by means of half die cutting stamping of thick steel plate. In this case, a backlash between the internal gear and the external gear has to be appropriately secured considering tooth profile deformation because of a load at actuation, an assembly error, and stamping precision. Larger backlash deteriorates torque transmission efficiency and may generate noise. Frictional coefficient between the internal gear and the external gear assumes larger when the backlash is smaller, which declines the torque transmission efficiency.

In order to ensure smooth torque transmission and meshing performance, a construction to provide two layered teeth including an internal gear and an external gear to each arm has proposed. However, because two teeth lines are configured to simultaneously engage with each other, pulsation of sliding force assumes large when the meshing is deviated because of a machining error to deteriorate operational feeling. That is, it is not favorable because whine is generated and heaviness of handle knob is varied.

A need thus exists for an angle-adjusting device, which ensures smooth torque transmission.

### SUMMARY OF THE INVENTION

US-A-5 452 983 discloses an angle-adjusting device as in the preamble of claim 1, which comprises a fixed arm and a movable arm; an inner gear and an outer gear; the inner gear comprising an Internal gear and an external gear; the outer gear comprising an internal gear and an external gear; the internal gears being connected to either the fixed arm or the movable arm ; the external gears being connected to either the movable arm or the fixed arm; the external gears having a central axis eccentric relative to a central axis of the internal gears of the inner and outer gears; the central axis for the external gears revolves around the central axis of the internal gears.
In light of the foregoing, the present invention is **characterized in that** a number of teeth on the external gears is less than a number of teeth on the internal gears; and the backlash of the inner gear is different from the backlash of the outer gear.

According to the present invention, at least two layers of gears including the external gear and the internal gear are provided, and the level of backlash in a first gear, one of the external gear and the internal gear, is set to be higher than that of a second gear, the other of the internal gear and the external gear. In a normal state, the torque is transmitted by meshing of the second gear. When a substantial external force such as a collision is applied, the impact of the external force is resisted by the first gear. Thus, the second gear is not damaged, and when the angle-adjusting device is further used, smooth torque transmission can be ensured.

### BRIEF DESCRIPTION OF THE DRAWINGS

The foregoing and additional features and characteristics of the present invention will become more apparent from the following detailed description considered with reference to the accompanying drawings, wherein:

Fig. 1 is a front view showing a vehicle seat assembled with an angle-adjusting device according to an embodiment of the present invention.

Fig. 2 is a front view of the angle-adjusting device according to the embodiment of the present invention.

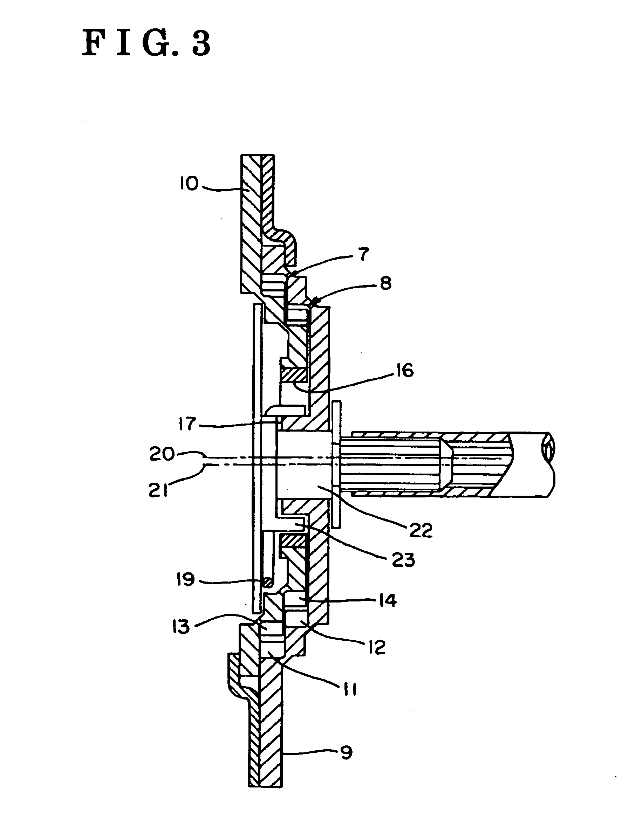

Fig. 3 is a cross-sectional view taken on line III-III of Fig. 2.

Fig. 4 is a plan view showing a pitch circle for an internal gear and a pitch circle for an external gear.

Fig. 5 is a partial plan view showing backlash at an external gear line.

### DETAILED DESCRIPTION

One embodiment of the present invention will be explained with reference to illustrations of drawing figures as follows.

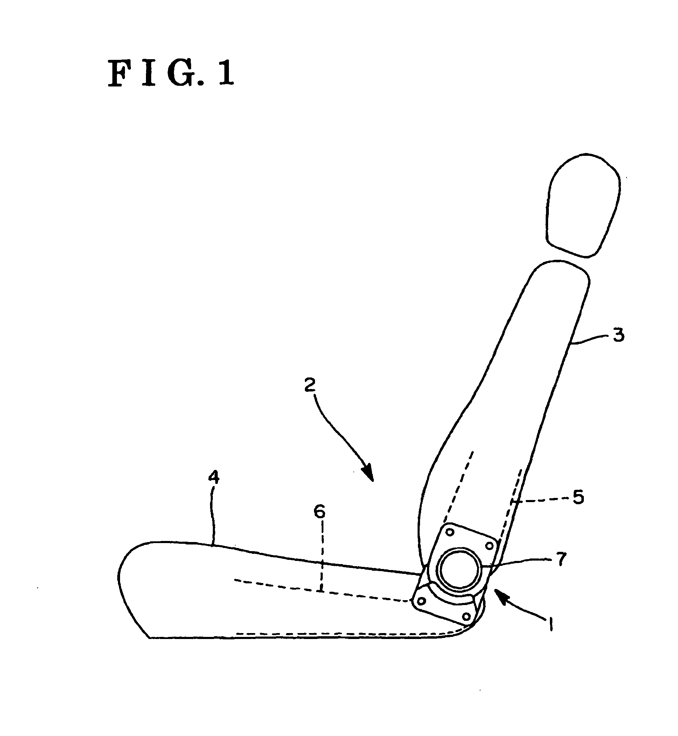

As shown in Fig. 1, an angle-adjusting device 1, for example, serves as a reclining device for adjusting a reclining angle of a seatback 3 of a seat 2, or as a vertical device for adjusting a height of a seat cushion 4, or the like. When the angle-adjusting device 1 is applied to the reclining device, the angle-adjusting device 1 is provided between a frame 5 of the seatback 3 and a frame 6 of the seat cushion 4. By rotating an operational handle 7 provided at the angle-adjusting device 1, the reclining angle of the seatback 3 can be arbitrarily adjusted. Further, when the operational handle 7 is not operated, the angle-adjusting device 1 supports the seatback 3 with a predetermined strength, thus supporting an occupant of the vehicle.

For adjusting the height of the seat cushion 4 the angle-adjusting device 1 may be assembled into a link mechanism provided between the frame 6 and an upper rail. The angle-adjusting device 1 can also be applied to a deceleration mechanism.

The angle-adjusting device 1 includes at least two layers of gear teeth lines, an outer gear 7 and an inner gear 8 combining an internal gear and an external gear which are eccentric in relation to one another. In other words, when applied to the seat reclining device, the angle-adjusting device 1 includes a fixed arm 9 fixed at the frame 6 of the seat cushion 4 and a rotational arm (movable arm) 10 rotatably supported by the fixed arm 9 and fixed at the frame 5 of the seatback 3. Internal gears 11, 12 are formed at the fixed arm 9 by half die cutting and machining. External gears 13, 14 are formed at the rotational ram 10 by half die cutting and machining. The number of teeth for the external gears 13, 14 is set to be less than the number of teeth for the internal gears 11, 12 by a difference of at least one tooth. More particularly, the teeth number of the external gear 14 of the inner gear 8 is set at less than the teeth number of the internal gear 12 of the inner gear 8 by a difference of at least one tooth. The teeth number of the external gear 13 of the outer gear 7 is set at less than the teeth number of the internal gear 11 of the outer gear 7 by a difference of at least one tooth. According to the embodiment shown in Fig.1, the internal gear 11, 12 are respectively set to include thirty-four teeth, and the external gears 13, 14 respectively include thirty-three teeth. The inner gear 8 is configured to be securely geared, and the outer gear 7 is configured to be geared with a considerable degree of backlash.

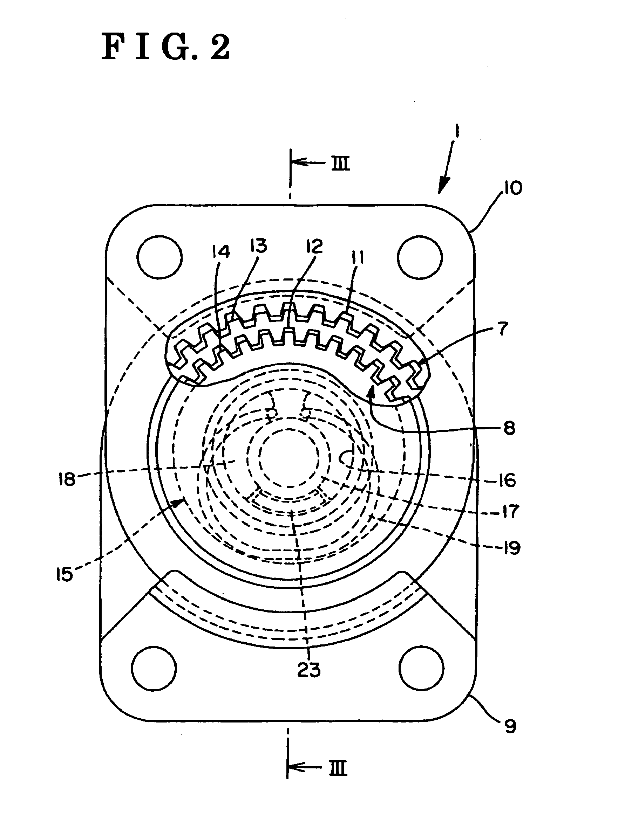

A backlash adjusting mechanism 15 includes a pair of wedge members 18 positioned within a space between an internal surface portion 16 of a bush and an external surface of a collar portion 17. In the position illustrated in Fig. 2, the wedge members 18 are configured to be of a thicker shape at an upper portion than at a bottom portion, and the degree of thickness is gradually reduced from the upper portion to the bottom portion. As shown in Fig. 2, the two wedge members 18 are designed to maintain a predetermined distance from one another, both at the top ends and at the bottom ends thereof. A spring member 19 is provided at the wedge members 18 for biasing the spring member 19 in a direction in which it can widen a distance between the top ends of the two wedge members 18.

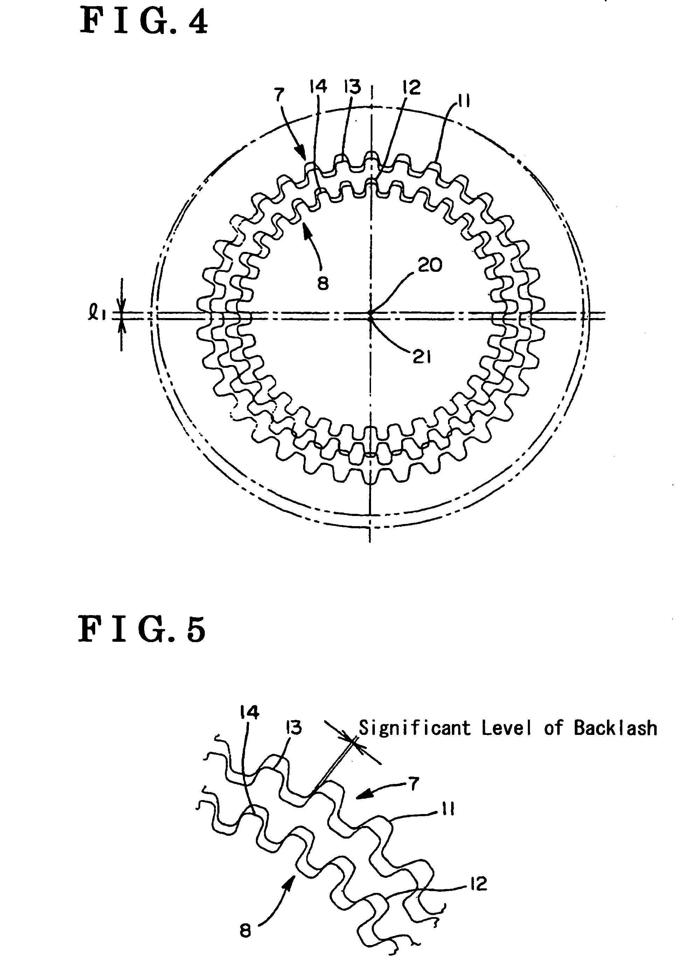

Further, as shown in Fig. 2, the wedge members 18 are configured to push the internal surface portion 16 upward of Fig. 2 by means of the biasing force of the spring member 19. Because the internal diameter surface portion 16 is pushed upward, as in Fig. 2, a degree of eccentricity of a center 20 of the external gears 13, 14 (i.e., represented as a distance l₁ in Fig. 4) is boosted relative to a center 21 of the internal gears 11, 12. Thus, the internal gear 12 and the external gear 14 of the inner gears 8 are pushed towards one another to eliminate the clearance between the teeth on the external gears 7 and the teeth on the internal gears 8, resulting in the elimination of backlash.

The backlash adjusting mechanism 15 further includes a claw portion claw portion 23 which is integrally formed with a shaft 22 and which is separated from a rotational center of the shaft 22. A tip end of the claw portion claw portion 23 is extended in parallel with a rotational center axis of the shaft 22, and is positioned between bottom ends of the wedge members 18. A first end of the shaft 22 is extended to be projected to a lateral side of the angle-adjusting device 1, and an operational handle is provided on the first end of the shaft 22.

By rotating the operational handle, the claw portion 23 contacts the bottom end of one of the wedge members 18 to push up the wedge member 18 against the biasing force of the spring member 19, and thus a degree of deviation (i.e., represented by the distance l₁ in Fig. 4) between the center 20 of the external gears 13, 14 and the center 21 of the internal gears 11, 12 is reduced. As a result, meshing between the internal gear 12 and the external gear 14 of the inner gear 8 is loosened, and the level of backlash is raised. Because the degree of backlash is raised, it becomes possible for both the internal gear 12 and the external gear 14 to rotate with minor degree of meshing resistance.

By further rotating the operational handle, the center 20 of the external gear revolves around the center 21 of the internal gear, and the position of the wedge member 18 rotates away from the position shown in Fig. 2. The meshing position between the external gears 13, 14 and the internal gears 11, 12 accordingly progresses in a manner as if the meshing position itself were rotating. As the operational handle rotates 360 degrees, a position of the rotational arm 10 is rotated relative to the fixed arm 9 by an angle corresponding to an angle of one pitch of the gear and accordingly, angle positions of the fixed arm 9 and the rotational arm 10 can be adjusted.

Constructions of the outer gear 7 and the inner gear 8 will be explained with reference to Figs. 4-5. The outer gear 7 includes an outer internal gear 11 formed at the fixed arm 9 and an outer external gear 13 formed at the rotational arm 10. The inner gear 8 includes an inner internal gear 12 formed at the fixed arm 9 and an inner external gear 14 formed at the rotational arm 10. The rotational center 20 is common to both the inner and outer external gears 11, 13. The rotational center 21 is common to the inner and outer internal gears 12, 14. The distance l₁ between rotational center axes is common to the internal gears 12, 14 and the external gears 11, 13.

It is preferable that the number of teeth on the external gears 13, 14 is either identical, or of integer multiples. It is also preferable that the distance l₁ between rotational center axes is adjusted by modification of the amount of addendum. On involute gear tooth profile, or trochoid curve, or the like, may be applied as the gear tooth profile.

One of the outer gear 7 and the inner gear 8 is configured to have a considerable degree of backlash. As shown in Fig. 5, backlash between the internal gear 11 and the external gear 13 of the outer gear 7 can be set at a high level, and in a normal state meshing of the outer gear 7 can be set to be unrestricted. Transmission of torque is normally carried out by the inner gear 8 in normal state. When a substantial external force is applied as a result of an accident such as a collision, the inner gear 8 is slightly deformed, the backlash is eliminated, the impact of the external force is resisted by the inner and outer gears 7, 8 and the seat and the occupant are thus protected.

According to the embodiment of the present invention, at least two layers of gear lines made up of an outer gear and an inner gear are combined, and torque transmission in a normal state is performed with one of gear lines, that is, by the meshing of gears with a modest degree of backlash. Thus, in comparison with known devices, problems associated with machining and positional precision of two layers of gear lines can be alleviated.

On the other hand, according to the embodiment of the present invention, at a time when an excessive load is applied in circumstances such as the time of collision, a gear for transmitting torque in a normal state is slightly deformed and it is possible that gears with significant degree of backlash make contact with one another. In other words, backlash is eliminated, and the impact of the excessive external force can be resisted by both the inner gears and the outer gears.

According to the embodiment of the present invention, the distance between the centers of the external gear of the outer gear and of the internal gear, which is meshed with the external gear, is set to be equal to the distance between the centers of the external gear of the inner gear and of the internal gear which is geared with the external gear. Thus, by adjusting the axial position, the distances between the centers can be adjusted to be identical, an arrangement which allows for a reduction in the size of the device. Further, by adopting identical numbers of teeth, the strength of the gear can be secured.

Moreover, reducing the thickness of one of the gears makes it easy to increase a level of backlash, and such an arrangement does not lead to a rise in manufacturing costs.

According to the embodiment of the present invention, at least two layers of gears including the external gear and the internal gear are provided, and the level of backlash in a first gear, one of the external gear and the internal gear, is set to be higher than that of a second gear, the other of the internal gear and the external gear. In a normal state, the torque is transmitted by meshing of the second gear. When a substantial external force such as a collision is applied, the impact of the external force is resisted by the first gear. Thus, the second gear is not damaged, and when the angle-adjusting device is further used, smooth torque transmission can be ensured.

The principles, preferred embodiment and mode of operation of the present invention have been described in the foregoing specification. However, the invention which is intended to be protected is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. An angle-adjusting device (1) comprising :
a fixed arm (9) and a movable arm (10);
an inner gear (8) and an outer gear (7);
the inner gear (8) comprising an internal gear (12) and an external gear (14);
the outer gear (7) comprising an internal gear (11) and an external gear (13);
the internal gears (11, 12) being connected to either the fixed arm (9) or the movable arm (10);
the external gears (13, 14) being connected to either the movable arm (10) or the fixed arm (9);
the external gears (13, 14) having a central axis (20) eccentric relative to a central axis (21) of the internal gears (11, 12) of the inner and outer gears (7, 8); the central axis (20) for the external gears (13, 14) revolves around the central axis (21) of the internal gears (11, 12); and
**characterized in that**
a number of teeth on the external gears (13, 14) is less than a number of teeth on the internal gears (11, 12);
the backlash of the inner gear (8) is different from the backlash of the outer gear (7).

2. The angle-adjusting device according to claim 1, wherein
a distance (l₁) between the center of the external gear (13) of the outer gear (7) and the center of the internal gear (11) of the outer gear (7) is equal to a distance (l₁) between the center of the external gear (14) of the inner gear (8) and the center of the internal gear (12) of the inner gear (8).

3. The angle-adjusting device according to claim 2, wherein
the number of teeth on the external gear (13) of the outer gear (7) and the number of teeth on the external gear (14) of the inner gear (8) are the same.

## Patentansprüche

1. Neigungsverstellvorrichtung (1) mit:
einem feststehenden Arm (9) und einem beweglichen Arm (10) und
einem inneren Zahnrad (8) und einem äußeren Zahnrad (7),
wobei
das innere Zahnrad (8) ein innenverzahntes Rad (12) und ein außenverzahntes Rad (14) aufweist,
das äußere Zahnrad (7) ein innenverzahntes Rad (11) und ein außenverzahntes Rad (13) aufweist,
die innenverzahnten Räder (11, 12) entweder mit dem feststehenden Arm (9) oder dem beweglichen Arm (10) verbunden sind,
die außenverzahnten Räder (13, 14) entweder mit dem beweglichen Arm (10) oder dem feststehenden Arm (9) verbunden sind,
die außenverzahnten Räder (13, 14) eine Mittelachse (20) haben, die in Bezug auf eine Mittelachse (21) der innenverzahnten Räder (11, 12) des inneren und des äußeren Zahnrads (7, 8) exzentrisch ist, und
die Mittelachse (20) für die äußeren Zahnräder (13, 14) die Mittelachse (21) der inneren Zahnräder (11, 12) umläuft,
**dadurch gekennzeichnet, dass**
eine Anzahl von Zähnen an den außenverzahnten Rädern (13, 14) kleiner als eine Anzahl von Zähnen an den innenverzahnten Rädern (11, 12) ist und
das Flankenspiel des inneren Zahnrads (8) von dem Flankenspiel des äußeren Zahnrads (7) verschieden ist.

2. Neigungsverstellvorrichtung nach Anspruch 1, **dadurch gekennzeichnet, dass** ein Abstand (l₁) zwischen dem Mittelpunkt des außenverzahnten Rads (13) des äußeren Zahnrads (7) und dem Mittelpunkt des innenverzahnten Rads (11) des äußeren Zahnrads (7) gleich einem Abstand (l₁) zwischen dem Mittelpunkt des außenverzahnten Rads (14) des inneren Zahnrads (8) und dem Mittelpunkt des innenverzahnten Rads (12) des inneren Zahnrads (8) ist.

3. Neigungsverstellvorrichtung nach Anspruch 2, **dadurch gekennzeichnet, dass** die Anzahl von Zähnen an dem außenverzahnten Rad (13) des äußeren Zahnrads (7) und die Anzahl von Zähnen an dem außenverzahnten Rad (14) des inneren Zahnrads (8) gleich sind.

## Revendications

1. Dispositif d'ajustement d'angle (1) comprenant :
un bras fixe (9) et un bras mobile (10) ;
une roue dentée intérieure (8) et une roue dentée extérieure (7) ;
la roue dentée intérieure (8) comprenant une roue dentée interne (12) et une roue dentée externe (14) ;
la roue dentée extérieure (7) comprenant une roue dentée interne (11) et une roue dentée externe (13) ;
les roues dentées internes (11, 12) étant connectées soit au bras fixe (9), soit au bras mobile (10) ;
les roues dentées externes (13, 14) étant connectées soit au bras mobile (10), soit au bras fixe (9) ;
les roues dentées externes (13, 14) ayant un axe central (20) excentrique par rapport à un axe central (21) des roues dentées internes (11, 12) des roues dentées intérieure et extérieure (7, 8) ;
l'axe central (20) pour les roues dentées externes (13, 14) tourne autour de l'axe central (21) des roues dentées internes (11, 12) ; et
**caractérisé en ce que**
un nombre de dents sur les roues dentées externes (13, 14) est inférieur à un nombre de dents sur les roues dentées internes (11, 12) ;
le jeu de dents de la roue dentée intérieure (8) est différent du jeu de dents de la roue dentée extérieure (7).

2. Dispositif d'ajustement d'angle selon la revendication 1, dans lequel
une distance (l₁) entre le centre de la roue dentée externe (13) de la roue dentée extérieure (7) et le centre de la roue dentée interne (11) de la roue dentée extérieure (7) est égale à une distance (l₁) entre le centre de la roue dentée externe (14) de la roue dentée intérieure (8) et le centre de la roue dentée interne (12) de la roue dentée intérieure (8).

3. Dispositif d'ajustement d'angle selon la revendication 2, dans lequel
le nombre de dents sur la roue dentée externe (13) de la roue dentée extérieure (7) et le nombre de dents sur la roue dentée externe (14) de la roue dentée intérieure (8) sont les mêmes.
